# EUROPÄISCHE PATENTSCHRIFT

(11) **EP 1 133 944 B1**
(45) Veröffentlichungstag und Bekanntmachung des Hinweises auf die Patenterteilung: **04.05.2005**
(21) Anmeldenummer: 01810151.9
(22) Anmeldetag: 15.02.2001
(51) Int. Cl.: A47J 31/46

(54) **Espressokaffeemaschine**
Espresso coffee machine
Machine à café espresso

(30) Priorität: 15.03.2000 CH 4902000
(43) Veröffentlichungstag der Anmeldung: 19.09.2001
(73) Patentinhaber: Fianara International B.V., 1079 LH Amsterdam (NL)
(72) Erfinder: Schmed, Arthur, 8635 Ober-Dürnten (CH)
(74) Vertreter: Rottmann, Maximilian R.

(56) Entgegenhaltungen:
- EP-A- 0 264 352
- EP-A- 0 542 045
- WO-A-98/56286
- CH-A- 668 543
- DE-A- 3 035 157

## Beschreibung

Die Erfindung betrifft eine Espressokaffeemaschine nach dem Oberbegriff des Anspruchs 1.

Unter einer Espressokaffeemaschine ist im vorliegenden Fall eine Kaffeemaschine zu verstehen, bei der das in einer Brühkammer oder in einem Siebhalter aufgenommene Kaffeepulver vom Brühwasser unter Druck durchströmt wird. Bei neueren Espressokaffeemaschinen besteht inzwischen die Möglichkeit, dass der Benutzer die zum Aufbrühen eines Kaffees verwendete Menge an Kaffeepulver sowie den Mahlgrad einstellen kann. Durch diese Variationsmöglichkeiten ergeben sich jedoch insofern Probleme, da damit auch der Druckabfall des die Brühkammer durchströmenden Brühwassers beeinflusst wird. Naturgemäss ist der Druckabfall umso höher, je grösser die Menge an Kaffeepulver ist und je feiner der Kaffee gemahlen ist. Umgekehrt nimmt der Druckabfall ab, wenn die Kaffeemenge reduziert wird und das Kaffeepulver gröber gemahlen wird. Daneben hängt dieser Druckabfall jedoch auch noch von weiteren, vom Benutzer nicht beeinflussbaren Parametern wie beispielsweise dem Verdichtungsgrad des Kaffeepulvers ab. Durch die genannten Parameter wird natürlich auch die Durchflussrate des Brühwassers durch das Kaffeepulver und damit Ausströmgeschwindigkeit des aufgebrühten Kaffees beeinflusst, was dazu führen kann, dass der Kaffee, je nach Konstellation, von sehr langsam bis sehr schnell ausströmt, ohne dass der Benutzer direkt darauf Einfluss nehmen kann.

So haben Studien beispielsweise gezeigt, dass sich die Kaffeetrinkgewohnheiten in nördlichen Ländern von denen in südlichen Ländern grundsätzlich unterscheiden. In südlichen Ländern wird ein Kaffeegetränk bevorzugterweise in Form eines Espresso zubereitet, währenddem in nördlichen Ländern mehrheitlich Milchkaffee oder Cappuccino getrunken wird. Aus besagten Studien geht auch hervor, dass in südlichen Ländern ein Qualitätsmerkmal bei der Zubereitung eines Espressos darin gesehen wird, dass dieser sehr langsam in die Espressotasse strömt, währenddem in den nördlichen Ländern vornehmlich eine schnelle Zubereitung des Kaffeegetränks im Vordergrund steht, zumal das Volumen bei einem Milchkaffee um ein Mehrfaches grösser ist als bei einem Espresso. Da bei einer tiefen Durchflussrate die Verweilzeit des Brühwasser in der Brühkammer naturgemäss länger ist als bei einer hohen Durchflussrate, wird mit einer tiefen Durchflussrate auch eine bessere Extraktion des Kaffeepulvers bewirkt. Damit ist auch erklärbar, warum die Durchflussrate einen Einfluss auf den Geschmack des zubereiteten Kaffees hat. Die Durchflussrate des Brühwassers durch das in der Brühkammer aufgenommene Kaffeepulver kann bei den bekannten, gattungsgemässen Kaffeemaschinen vom Benutzer jedoch bis anhin nur indirekt, beispielsweise über den Mahlgrad, beeinflusst werden.

Für die genannten Espressokaffeemaschinen sind jedoch beispielsweise Ventileinrichtungen bekannt, welche dazu ausgebildet sind, den Druck in der Brühkammer zu erhöhen, so dass beim Ausfliessen des Kaffeegetränks einen Schaum erzeugt wird, der sich auf der Oberfläche des fertigen Kaffees niederschlägt. Allerdings haben diese Ventile in bezug auf die Durchflussrate des Brühwassers durch das in der Brühkammer aufgenommene Kaffeepulver nur insofern einen Einfluss, dass sie den Gegendruck in der Brühkammer erhöhen und damit die Durchflussrate in jedem Fall herabsetzen.

Ein derartiges Ventil ist beispielsweise ist aus der DE 30 35 157 bekannt. Darin wird ein Brühkopf für eine Espressokaffeemaschine offenbart, der mit einem Siebeinsatz für das Kaffeepulver versehen ist. Am Auslass dieses Siebeinsatzes ist ein federbelastetes Rückschlagventil angeordnet, mittels welchem der Druck im Brühkopf soweit erhöht wird, dass der Kaffee unter Schaumbildung austritt.

Im weiteren ist aus der EP 0 542 045 eine Kaffeebrühvorrichtung bekannt, bei der am Auslass der Brühkammer ein Ventil angeordnet ist, dessen Ventilkörper entgegen der Austrittsrichtung des Kaffees vorgespannt ist. Der Ventilkörper kann von dem aus der Brühkammer austretenden Kaffee entgegen der Vorspannkraft des Ventilkörpers verschoben werden. Mit dieser Ausgestaltung soll ein Gegendruck von ca. 1 bar erzeugt und ein haltbarer Schaum auf der Oberfläche des gebrühten Kaffees sichergestellt werden.

Auch aus der CH 668 543 ist eine gattungsgemässe Espressokaffeemaschine bekannt, bei der am Auslass der Brühkammer ein federbelastetes Kugelventil vorgesehen ist. Mit diesem Kugelventil soll wiederum der Druck in der Brühkammer erhöht werden, um die Schaumbildung des ausfliessenden Kaffeegetränks zu verbessern.

Schliesslich ist aus der EP 0 726 053 ist eine Vorrichtung zum Ausgeben eines Kaffeegetränks bekannt, bei der im Abführkanal eines Filterbehälters zur Aufnahme des Kaffeepulvers ein Sperrventil angeordnet ist. Dieses Sperrventil ist mit einem Sperrelement versehen, das durch ein elastisches Mittel an einem Dichtsitz gehalten wird. Zwischen dem Sperrelement und dem Dichtsitz wird ein geschlossener Spalt gebildet, in dem sich die vom Kaffeepulver freigegebenen Feststoffteilchen ansammeln können, um einen Stopfen zu bilden. Sobald ein vorbestimmter Druck im Filterbehälter aufgebaut ist, wird das Sperrelement entgegen der Federkraft des elastischen Mittels verschoben, so dass sich der zwischen dem Sperrelement und dem Dichtsitz bestehende Spalt vergrössert und nach unten hin öffnet, wodurch der Stopfen freigegeben wird und die Extraktflüssigkeit nach unten abfliessen kann. Durch diese Ausbildung soll ein möglichst vollständiges Extrahieren des Kaffeepulvers ermöglicht werden.

Schliesslich ist aus der EP 0 264 352 A1 ein Brühkopf für Espressokaffeemaschinen bekannt. Der Brühkopf umfasst einen mit einem Bajonettverschluss versehenen Halter, der im Innern eine Kavität zur Aufnahme eines Filtereinsatzes aufweist. Der Filtereinsatz dient der Aufnahme einer Charge Kaffeemehl, wobei er gleichzeitig auch die Brühkammer bildet, wenn der Halter an der Kaffeemaschine fixiert ist. Der Brühkopf ist im weiteren mit einem Unterteil versehen, der auf der Unterseite mit zwei Getränkeauslässen versehen ist und in dessen Innerem eine Ventileinrichtung angeordnet ist. Der Übergang von der Kavität zum Unterteil wird durch eine Bohrung gebildet, in welcher eine durch ein Gewicht belastete Nadel beweglich aufgenommen ist. Das obere Ende der Nadel wird durch ein konisches Endstück gebildet, mittels welchem der Durchtrittsquerschnitt der Bohrung veränderbar ist. Im weiteren ist eine deformierbare Membrane vorgesehen, welche eine Kompensationskammer definiert und mit einem Auslass versehen ist. Durch die Kompensationskammer hindurch verläuft die Nadel. Die Membrane ist mittels einer Feder in Richtung des Filtereinsatzes belastet, wobei sie gleichzeitig am Gewicht der Nadel angreift und diesen nach oben in die Offenstellung drückt. Beim Aufbrühen eines Kaffees wird die Membran von der durchströmenden Flüssigkeit zusammen mit der Nadel nach unten gedrückt. Die Ventileinrichtung soll dabei sicherstellen, dass unabhängig von der Krongrösse des gemahlenen Kaffees wie auch weiterer Faktoren eine konstante Durchflussrate des aufgebrühten Kaffees sichergestellt wird.

Ausgehend vom bekannten Stand der Technik besteht die Aufgabe der vorliegenden Erfindung darin, eine Espressokaffeemaschine der im Oberbegriff des Anspruchs 1 genannten Art derart auszubilden, dass der Benutzer direkt Einfluss auf die pro Zeiteinheit aufzubrühende Menge an Kaffee nehmen kann, wobei das in der Brühkammer aufgenommene Kaffeepulver im Rahmen dieser Vorgabe vom Brühwasser mit einer weitgehend konstanten Durchflussrate durchströmt werden soll und zwar möglichst unabhängig von der Menge und Korngrösse des in der Brühkammer aufgenommenen Kaffeepulvers.

Diese Aufgabe wird durch die im Kennzeichen des Anspruchs 1 angeführten Merkmale gelöst.

Indem Mittel zum Verändern der pro Zeiteinheit durch die Ventileinrichtung strömenden Menge an Kaffeegetränk vorgesehen sind kann der Benutzer direkt Einfluss auf die absolute Durchflussrate des Brühwassers durch das in der Brühkammer aufgenommene Kaffeepulver und damit auf die pro Zeiteinheit aufgebrühte Menge Kaffe nehmen. Da die Ventileinrichtung zudem als Regelventileinrichtung ausgebildet ist, bei der die Feder bestrebt ist, den Ventilkörper in der Offenstellung zu halten und der Ventilkörper vom unter Druck stehenden Kaffeegetränk entgegen der Vorspannkraft der Feder in Schliessrichtung verschiebbar ist, kann mit der beschriebenen Regelventileinrichtung auch die relative Durchflussrate innerhalb eines gewissen Rahmens konstant gehalten. Es versteht sich, dass die Durchflussrate des durch das Kaffeepulver strömenden Brühwassers mit einer mechanischen Regelventileinrichtung der genannten Art nicht auf einem absolut konstanten Niveau gehalten werden kann, da das Regelverhalten der Ventileinrichtung u.a. auch von der Viskosität der durchströmenden Flüssigkeit abhängt. Insofern kann sich eine unterschiedliche Viskosität des aus der Brühkammer ausströmenden Kaffeegetränks bis zu einem bestimmten Grad auch auf die Geschwindigkeit des durch das Kaffeepulver strömenden Brühwassers auswirken.

Bevorzugte Weiterbildungen der Espressokaffeemaschine sind in den abhängigen Ansprüchen 2 bis 20 umschrieben.

Anhand von Zeichnungen werden nachfolgend zwei bevorzugte Ausführungsbeispiele der Erfindung näher erläutert. In diesen Zeichnungen zeigt:
- Fig. 1: eine schematisch dargestellte Kaffeemaschine, welche mit einer Ventileinrichtung zum Variieren der pro Zeiteinheit ausströmenden Menge an Kaffeegetränk versehen ist;
- Fig. 2: einen Längsschnitt durch die Ventileinrichtung in der Stellung "Milchkaffee";
- Fig. 2a: einen vergrösserten Ausschnitt aus der Fig. 2;
- Fig. 3: einen Längsschnitt durch die Ventileinrichtung in der Stellung "Espresso", und
- Fig. 4: eine alternative Ausführungsform der Ventileinrichtung.
- Fig. 5: die Ventileinrichtung mit einer alternativen Ausbildung des Verstellmechanismus in einem Längsschnitt, und
- Fig. 6: die Ventileinrichtung gemäss Fig. 5 in einer Draufsicht.

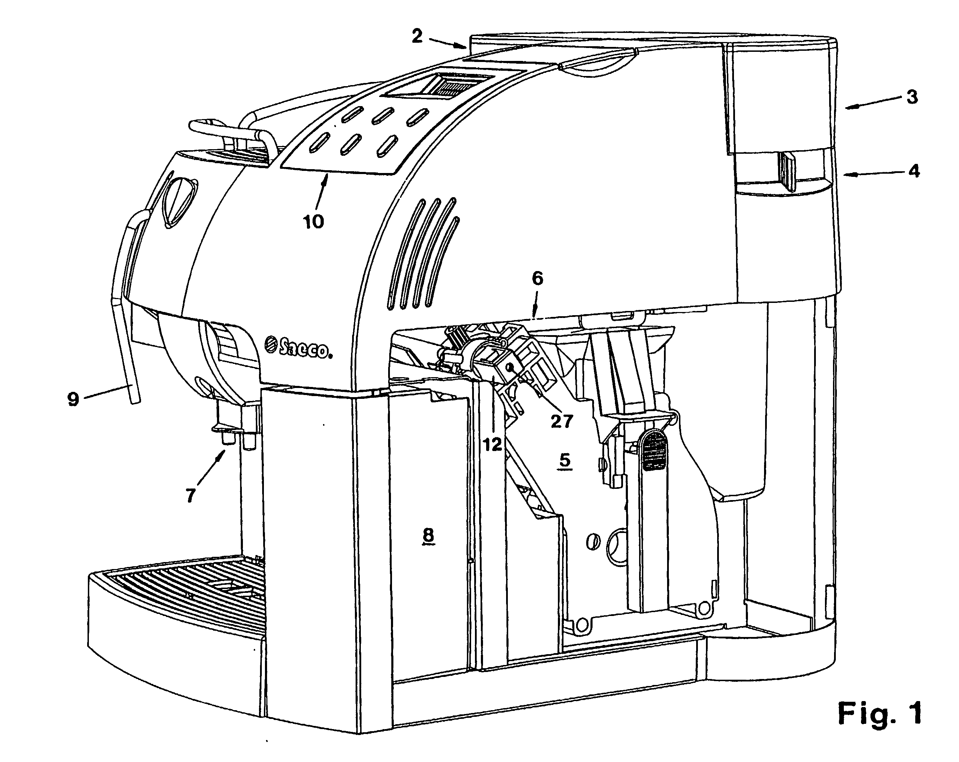

Fig. 1 zeigt eine Espressokaffeemaschine in stark vereinfachter Darstellung. Espressokaffeemaschinen der hier zur Rede stehenden Art verfügen im allgemeinen über einen Wassertank 2, einen Kaffeebohnenbehälter 3, ein Mahlwerk 4, eine Brüheinheit 5 mit einer Brühkammer 6, einen Getränkeauslass 7, einen Kaffeesatzbehälter 8, einen Heisswasser- bzw. Dampfauslass 9, sowie eine Bedien- und Steuereinheit 10. Eine zum Fördern des Brühwassers notwendige Pumpe ist aus dieser Darstellung nicht ersichtlich.

Die in der Brüheinheit 5 angeordnete Brühkammer 6 dient der Aufnahme des aufzubrühenden Kaffeepulvers, wobei das Kaffeepulver vor dem eigentlichen Aufbrühvorgang mittels eines beweglichen Kolbens (nicht dargestellt) verdichtet und danach vom Brühwasser unter Druck durchströmt wird. Es versteht sich, dass das Kaffeepulver dem unter einem Druck von ca. 8 bis 12 bar stehenden Brühwasser einen Widerstand entgegensetzt, der einen Druckabfall des Brühwassers bewirkt. Dieser Druckabfall wird insbesondere durch den Verdichtungsgrad, die Menge und die Komgrösse (Mahlgrad) des Kaffeepulvers beeinflusst. Da diese Parameter vom Benutzer jedoch nur bis zu einem bestimmten Grad beeinflussbar sind, konnte der Benutzer bis anhin kaum Einfluss auf die pro Zeiteinheit aus dem Getränkeauslass strömende Menge an Kaffee nehmen.

Zwischen der Brüheinheit 5 und dem Getränkeauslass 7 ist nun eine Ventileinrichtung 12 vorgesehen, mittels welcher die durchströmende Menge an Kaffeegetränk und damit die pro Zeiteinheit aus dem Getränkeauslass 7 ausströmende Menge an Kaffeegetränk erstmals variierbar ist. Die Ventileinrichtung 12 weist dazu eine Stellschraube 27 auf.

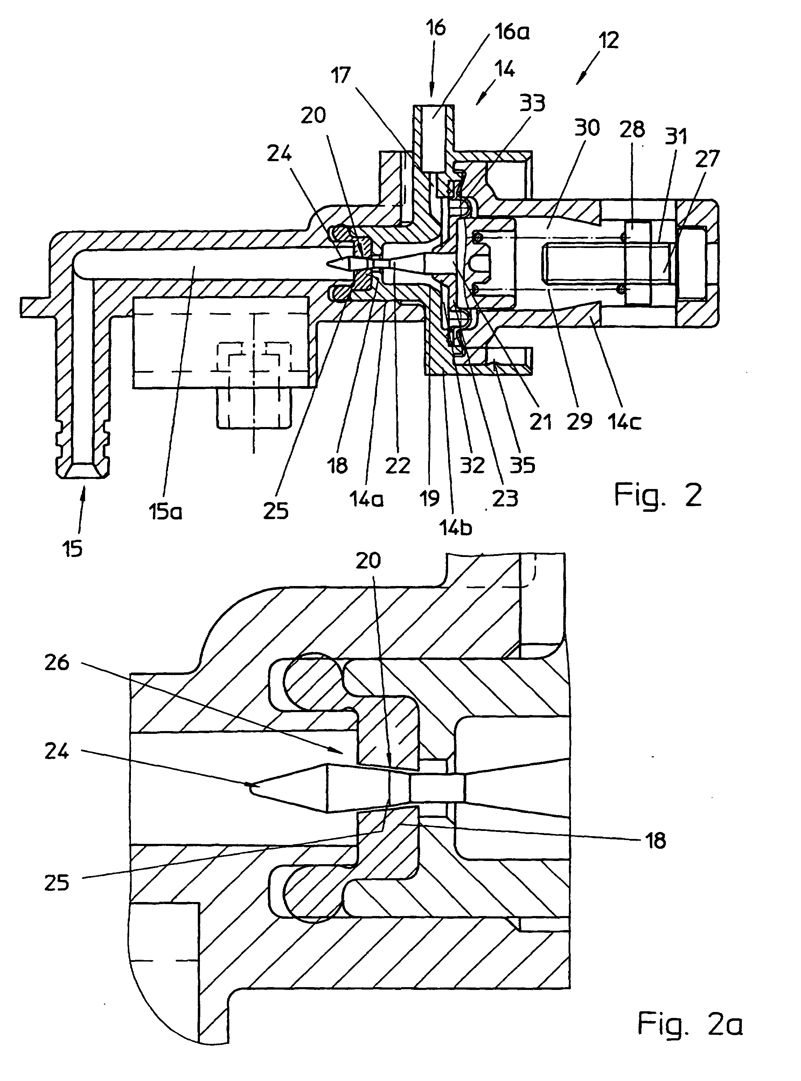

Fig. 2 zeigt einen Längsschnitt durch das erste Ausführungsbeispiel der Ventileinrichtung 12 in einer ersten Stellung, welche sich insbesondere für die Zubereitung von "Milchkaffee" eignet. Die Ventileinrichtung 12 weist ein aus mehreren Gehäuseteilen 14a, 14b, 14c bestehendes Ventilgehäuse 14 mit einem Einlass 15 und einem Auslass 16 auf. Der Einlass 15 ist mit einem Einlasskanal 15a und der Auslass 16 mit einem Auslasskanal 16a versehen. Der Einlass 15 der Ventileinrichtung 12 ist mit dem Auslass der Brühkammer verbunden. Über den Einlasskanal 15a kann das frisch aufgebrühte Kaffeegetränk in die Ventileinrichtung 12 einströmen. Der Auslass 16 ist mit dem eigentlichen Getränkeauslass der Kaffeemaschine verbunden; d.h. vom Auslasskanal 16a strömt das aufgebrühte Kaffeegetränk über eine nicht näher dargestellte Leitung zu dem Getränkeauslass.

Im Einlasskanal 15a ist ein den Ventilsitz bildender, aus einem elastischen Material gefertigter Einsatz 18 angeordnet. Hinter diesem Einsatz 18 mündet der Einlasskanal 15a in eine Ventilkammer 19, welche ihrerseits über eine mit einem definierten Querschnitt versehene Bohrung 17 mit dem Auslasskanal 16a verbunden ist. Im Ventilgehäuse 14 ist ein verschiebbarer Ventilkörper 21 aufgenommen, der mit einem eine konische Steuerfläche 25 aufweisenden Kopfteil 24 versehen ist, der sich durch den Einsatz 18 hindurch erstreckt. Der einstückig ausgebildete Ventilkörper 21 weist zudem einen vom unter Druck stehenden Kaffeegetränk beaufschlagbaren Basisteil 23 auf. Da der Einsatz 18 aus einem elastischen Material gefertigt ist, kann dieser bei der Montage der Ventileinrichtung über den Kopfteil 24 des Ventilkörpers 21 geschoben werden. Im rückwärtigen Teil des Ventilgehäuses 14 ist die Stellschraube 27 angeordnet, die mit einer Mutter 28 versehen ist, an welcher eine in einem Rückraum 30 aufgenommene Feder 29 zum Vorspannen des Ventilkörpers 21 abgestützt ist. Zum Abdichten des Rückraums 30 ist eine Membran 32 vorgesehen, welche zwischen zwei Ventilgehäuseteilen 14b, 14c fixiert ist, wobei ein mehrere Schnappelemente 35 aufweisender Schnappverschluss zum Fixieren des einen am anderen Gehäuseteils 14b, 14c vorgesehen ist. Die Membran 32 weist eine kreisringförmige Vertiefung 33 auf, in deren Bereich die Membran 32 nur eine geringe Wandstärke aufweist, so dass eine gute Auslenkbarkeit der Membran 32 sichergestellt ist. Die Membran 32 weist ausserdem eine zentrale Öffnung auf, durch welche sich der Schaft 22 des Ventilkörpers 21 erstreckt.

Fig. 2a zeigt den Vorderteil des Ventilkörpers in einem gegenüber der Fig. 2 vergrösserten Ausschnitt. Aus dieser Darstellung ist ersichtlich, dass der Einsatz 18 mit einem sich in Durchflussrichtung des Kaffeegetränks konisch verjüngenden Ventilsitz 20 versehen ist und der Kopfteil 24 des Ventilkörpers 21 eine konische, mit dem Ventilsitz 20 korrespondierenden Steuerfläche 25 aufweist. Im drucklosen Zustand befindet sich der Ventilkörper 21, durch die Vorspannung der Feder 29 (Fig. 2), am linken Endanschlag, so dass zwischen dem Ventilsitz 20 und der konischen Steuerfläche 25 des Kopfteils 24 eine Öffnung 26 verbleibt, über welche das Kaffeegetränk vom Einlasskanal 15a in den Ventilraum 19 einströmen kann.

Anhand der Figuren 2 und 2a wird die Wirkungsweise der Ventileinrichtung 12 näher erläutert. Durch das Aktivieren einer nicht dargestellten Pumpe, durchströmt das Brühwasser das in der Brühkammer aufgenommene Kaffeepulver. Nach der Bühkammer strömt das aufgebrühte Kaffeegetränk in den Einlasskanal 15a von wo es über die Öffnung 26 zwischen dem Ventilsitz 20 und dem konischen Abschnitt 25 des Kopfteils 24 in die Ventilkammer 19 strömt. In der Ventilkammer 19 wird ein Überdruck aufgebaut, der abhängig ist, von der pro Zeiteinheit einströmenden Menge an Kaffeegetränk. Dieser Überdruck wirkt über die Membran 32 auf den Basisteil 23 des Ventilkörpers 21 ein und übt eine der Vorspannkraft der Feder 29 entgegengesetzte Kraft auf den Ventilkörper 21 aus.

Sobald die vom unter Druck stehenden Kaffeegetränk auf den Ventilkörper 21 einwirkende Kraft grösser ist, als die Vorspannkraft der Feder 29 (Reibung vemachlässigt), wird der Ventilkörper 21 nach rechts verschoben. Durch dieses Verschieben verkleinert sich die für das durchströmende Kaffeegetränk zur Verfügung stehende Öffnung 26 zwischen dem Ventilsitz 20 und dem konischen Abschnitt 25 des Kopfteils 24 kontinuierlich.

Durch die relativ grosse, vom Kaffeegetränk beaufschlagte Fläche des Basisteils 23 des Ventilkörpers 21 genügt schon ein vergleichsweise geringer Überdruck in der Ventilkammer 19, um den Ventilkörper 21 weiter nach rechts zu Verschieben. Dadurch wird die Öffnung 26 zwischen dem Ventilsitz 20 und dem konischen Abschnitt 25 des Kopfteils 24 wieder verkleinert, und der Überdruck in der Ventilkammer 19 verringert sich, da das Kaffeegetränk über die Bohrung 17 in den Auslasskanal 16a entweichen kann.

Diese Ausgestaltung der Ventilvorrichtung 12 entspricht einem mechanischen Regelventil, welches den Durchfluss in Abhängigkeit der Federvorspannung regelt. In der in Fig. 2 gezeigten Stellung ist die Federvorspannung relativ gross gewählt, wodurch ein relativ grosser Überdruck in der Ventilkammer 19 aufgebaut werden muss, damit der Ventilkopf 24 um einen bestimmten Betrag nach rechts bewegt werden kann. Dadurch strömt das Kaffeegetränk letztlich mit einer hohen Durchflussrate durch die Ventileinrichtung 12. Diese Voreinstellung der Ventileinrichtung 12 eignet sich daher für die Zubereitung von Milchkaffee.

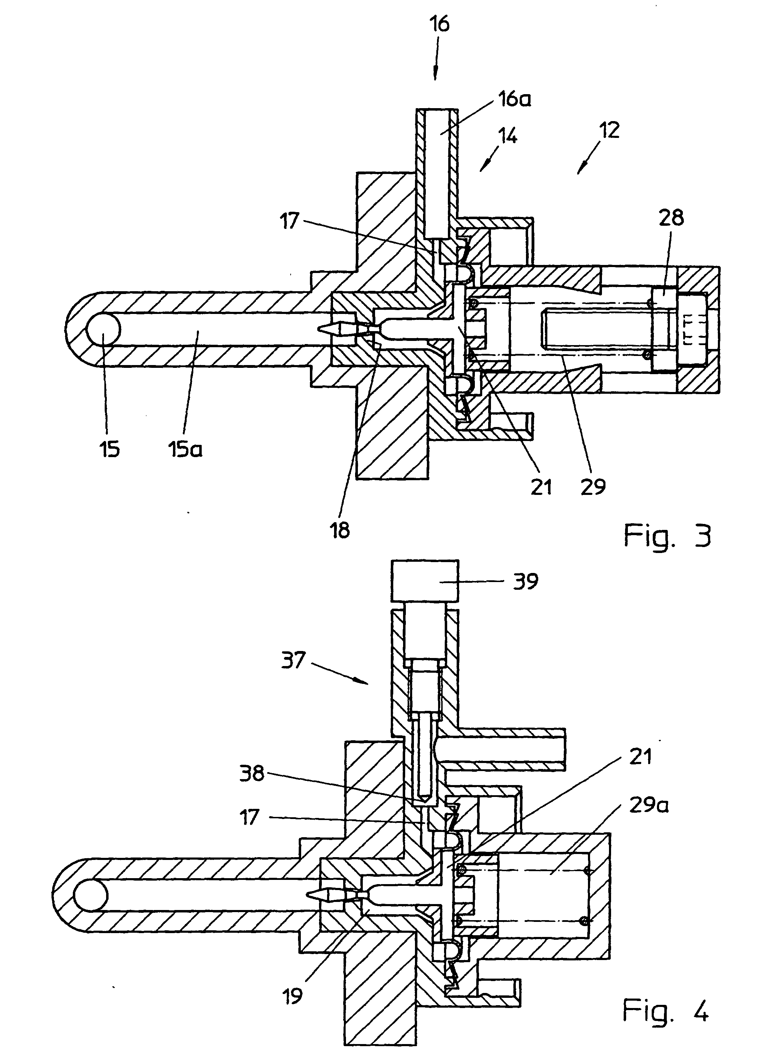

In der in Fig. 3 gezeigten Stellung befindet sich die Mutter 28 in einer mehr nach rechts verschobenen Position, so dass die Feder 29 mit einer geringeren Kraft vorgespannt ist. Dadurch braucht es gegenüber der in Fig. 2 gezeigten Stellung einen geringeren Überdruck, damit der Ventilkörper 21 nach rechts verschoben und die Öffnung 26 zwischen dem Ventilsitz 20 und dem konischen Abschnitt 25 des Kopfteils 24 verkleinert wird. Somit wird ein früheres Verkleinern der Durchlassöffnung 26 am Ventilsitz 20 bewirkt, was sich in einer geringeren Durchflussrate durch die Ventileinrichtung 12 bemerkbar macht. Damit strömt auch das Brühwasser relativ langsam durch das in der Brühkammer aufgenommene Kaffeepulver, so dass sich diese Voreinstellung der Ventileinrichtung insbesondere für die Zubereitung von Espresso eignet.

Die Stellschraube ist vorzugsweise mit einem Gewinde 31 mit grosser Steigung versehen, so dass beispielsweise eine Umdrehung von 300° genügt, um von der in Fig. 2 gezeigten Stellung "Milchkaffe" zu der in Fig. 3 gezeigten Stellung "Espresso" zu gelangen. Vorzugsweise ist aber zumindest noch eine weitere Zwischenstellung, beispielsweise für "mittelstarken Kaffee", vorgesehen. Natürlich kann auch eine stufenlose Verstellung vorgesehen werden.

Durch die beschriebene Ausbildung und das daraus resultierende Regelverhalten der Ventileinrichtung 12 kann sichergestellt werden, dass das in der Brühkammer aufgenommene Kaffeepulver vom Brühwasser mit einer relativ konstanten Geschwindigkeit durchströmt wird. Die absolute Durchflussrate wird dabei insbesondere durch die Voreinstellung der Ventilvorrichtung 12 bestimmt. Durch das Regelverhalten der Ventileinrichtung 12 haben die vorgängig angeführten Parameter wie Verdichtungsgrad, Menge und Korngrösse (Mahlgrad) des Kaffeepulvers nur noch einen geringen Einfluss auf die Durchflussrate des Brühwassers durch das Kaffeepulver. Bei grob gemahlenem Kaffeepulver wird dem durch das Kaffeepulver strömendem Brühwasser nur einen relativ geringer Widerstand entgegengesetzt, was sich in einem entsprechend geringen Druckabfall bemerkbar macht, so dass nach der Brühkammer noch ein relativ hoher absoluter Brühwasserdruck zur Verfügung steht, währenddem bei fein gemahlenem Kaffeepulver dem durchströmendem Brühwasser einen relativ grosser Widerstand entgegengesetzt wird, was sich in einem vergleichsweise hohen Druckabfall bemerkbar macht, so dass der Brühwasserdruck nach der Brühkammer entsprechend geringer ist. Durch das resultierende Regelverhalten der Ventileinrichtung 12, schnelles Ansprechen und Verkleinern der Öffnung 26 zwischen dem Ventilsitz 20 und dem konischen Abschnitt 25 des Kopfteils 24 bei hohem Druck, langsames Ansprechen und Verkleinern der Öffnung 26 bei geringem Druck, haben die angeführten Parameter des in der Brühkammer aufgenommenen Kaffeepulvers nur noch einen geringen Einfluss auf die Durchflussrate des Brühwassers durch das verdichtete Kaffeepulver. Dadurch wird einerseits eine hohe, reproduzierbare Qualität des zubereiteten Kaffeegetränks sichergestellt und zum anderen hat es den Vorteil, dass das bei modernen Kaffeemaschinen zumeist vorhandene Mahlwerk nicht mehr mit einem in einem weiten Bereich variierbaren Verstellmechanismus zum Einstellen des Mahlgrads versehen sein muss, wodurch die Bedienung der Kaffeemaschine vereinfacht wird.

Es versteht sich, dass an der Kaffeemaschine selber ein Betätigungsmittel wie beispielsweise ein Drehknopf vorgesehen werden kann, mittels welchem die Stellschraube 27 manuell in die gewünschte Position verdrehbar ist. Anstelle einer manuellen Betätigung kann jedoch beispielsweise auch eine elektromotorische Verstellmöglichkeit für die Stellschraube vorgesehen werden. Beispielsweise könnte die Kaffeemaschine auch mit Bedienelementen zum Anwählen von verschiedenen Kaffeearten (Milchkaffe, mittelstarker Kaffee, Espresso) versehen und eine Verstelleinrichtung vorgesehen werden, welche die Stellschraube in Abhängigkeit des angewählten Kaffeegetränks in eine vorbestimmte Stellung bewegt.

Fig. 4 zeigt eine alternative Ausführungsform der Ventileinrichtung. Bei dieser Ausführungsform ist die Vorspannung der den Ventilkörper 21 belastenden Feder 29a nicht veränderbar. Um jedoch das Volumen des pro Zeiteinheit aus dem Getränkeauslass ausströmenden Kaffeegetränks trotzdem variieren zu können, ist im auslasseitigen Endbereich der aus der Ventilkammer 19 führenden Bohrung 17 ein an einer Stellschraube 39 angeordnetes Nadelventil 37 vorgesehen. Durch Drehen der Stellschraube wird die Nadelspitze 38 des Nadelventils 37 in axialer Richtung verschoben, so dass der strömungsrelevante Auslassquerschnitt der Ventilkammer 19, bzw. der aus der Ventilkammer 19 führenden Bohrung 17 verändert werden kann. In diesem Falle dient der federvorgespannte Ventilkörper 21 primär dazu, die Durchflussrate durch die Ventileinrichtung möglichst konstant zu halten.

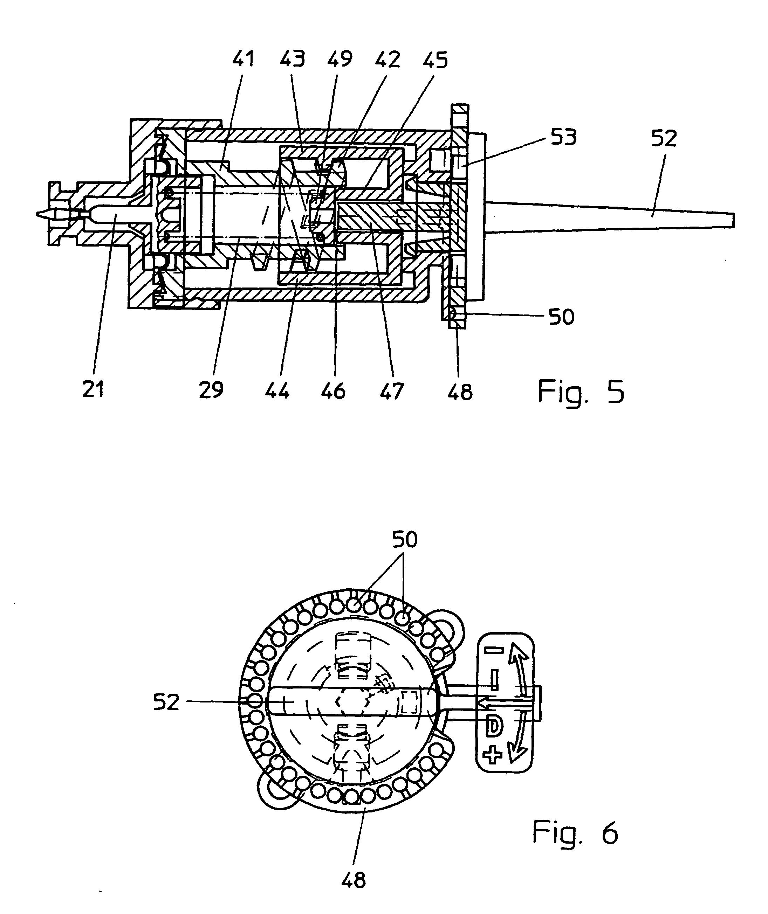

Fig. 5 zeigt eine Ventileinrichtung mit einer alternativen Ausbildung des Verstellmechanismus in einem Längsschnitt. Die Ventileinrichtung entspricht dabei grundsätzlich derjenigen von Fig. 2, wobei der rückwärtige Gehäuseteil 41 mit einem Aussengewinde 42 versehen ist. Zum Verändern der Vorspannung der Feder 29 ist ein Schlitten 43 vorgesehen. Der Schlitten 43 ist auf der Innenseite mit einem Innengewinde 44 versehen, das mit dem Aussengewinde 42 des rückwärtigen Gehäuseteils 41 zahnt. Der Schlitten 43 verfügt über einen zylindrischen Fortsatz 45, an dem über einen Federteller 49 die zum Vorspannen des Ventilkörpers 21 vorgesehene Feder 29 abgestützt ist. Der Fortsatz 45 ist mit einer 6-Kant-Öffnung 46 versehen, in welche ein korrespondierender Schaft 47 einer Verstellscheibe 48 eingeführt ist. Zur Betätigung bzw. zum Verschieben des Schlittens 43 ist ein Drehknopf 52 vorgesehen, der auf der Vorderseite Nocken 53 aufweist, die in korrspondierende Öffnungen der Verstellscheibe 48 eingreifen, so dass eine Drehbewegung des Drehknopfs 52 über die Verstellscheibe 48 auf den Schlitten 43 übertragen wird. Mit dem Bezugszeichen 50 sind Rastelemente bezeichnet, deren Funktion nachfolgend anhand der Figur 6 noch näher erläutert werden.

Fig. 6 zeigt die Ventileinrichtung gemäss Fig. 5 in einer Draufsicht. Aus dieser Darstellung ist ersichtlich, dass eine Vielzahl von Rastelementen 50 vorgesehen sind, welche zum einen die Stufung beim Verdrehen des Verstellknopfs 52 vorgeben und zum anderen sicherstellen, dass die Verstellscheibe 48 mitsamt dem Schlitten 43 in der vorgegebenen Stellung verharren, so dass sich die Federvorspannung nicht ungewollt verändert.

Anstelle der in Fig. 1 gezeigten vollautomatischen Kaffeemaschine kann die Ventileinrichtung natürlich auch bei konventionellen Espressomaschinen zum Einsatz kommen, bei denen ein manuell zu befestigender Siebhalter vorgesehen ist. In diesem Fall wird die Ventileinrichtung vorzugsweise zwischen dem Siebhalter und dem Auslass der Kaffeemaschine angeordnet.

## Patentansprüche

1. Espressokaffeemaschine (1) mit einer Brühkammer (6) zur Aufnahme und zum Aufbrühen von Kaffeepulver sowie mit einer zwischen der Brühkammer (6) und einem Getränkeauslass (7) angeordneten Ventileinrichtung (12), die einen relativ zu einem Ventilsitz (20) verschiebbaren, mittels einer Feder (29) belasteten Ventilkörper (21) aufweist und als Regelventileinrichtung ausgebildet ist, bei der die Feder (29) bestrebt ist, den Ventilkörper (21) in der Offenstellung zu halten und der Ventilkörper (21) vom unter Druck stehenden Kaffeegetränk entgegen der Vorspannkraft der Feder (29) in Schliessrichtung verschiebbar ist, **dadurch gekennzeichnet, dass** durch den Benutzer beeinflussbare Mittel (27, 28; 37, 39) zum Verändern der pro Zeiteinheit durch die Ventileinrichtung (12) strömenden Menge an Kaffeegetränk vorgesehen sind.

2. Espressokaffeemaschine (1) nach Anspruch 1, **dadurch gekennzeichnet, dass** Mittel (27, 28) zum Verändern der Vorspannkraft der Feder (29) vorgesehen sind.

3. Espressokaffeemaschine (1) nach Anspruch 1 oder 2, **dadurch gekennzeichnet, dass** der Ventilsitz (20) am Einlass einer Ventilkammer (19) angeordnet ist und Mittel (37, 39) zum Verändern des strömungstechnisch relevanten Auslassquerschnitts der Ventilkammer (19) vorgesehen sind.

4. Espressokaffeemaschine (1) nach einem der vorhergehenden Ansprüche, **dadurch gekennzeichnet, dass** der Ventilsitz (20) am Einlass einer Ventilkammer (19) angeordnet ist, deren Auslass durch eine mit einem definierten Querschnitt versehene Bohrung (17) gebildet ist, wobei in der Ventilkammer (19) ein vom unter Druck stehenden Kaffeegetränk beaufschlagbarer Basisteil (23) des Ventilkörpers (21) angeordnet ist.

5. Espressokaffeemaschine (1) nach einem der vorhergehenden Ansprüche, **dadurch gekennzeichnet, dass** die Ventileinrichtung (12) als mechanisches Regelventil ausgebildet ist, welches den für das durchströmende Kaffeegetränk relevanten Querschnitt einer Öffnung (26) am Ventilsitz (20) in Abhängigkeit des dem Brühwasser vom aufzubrühenden Kaffeepulver entgegengesetzten Strömungswiderstandes derart verändert, dass eine weitgehend konstante Durchflussrate des Kaffeegetränks durch das sich in der Brühkammer befindliche Kaffeepulver erreichbar ist.

6. Espressokaffeemaschine (1) nach einem der vorhergehenden Ansprüche, **dadurch gekennzeichnet, dass** der Ventilkörper (21) einen Schaft (22) mit einem endseitig daran angeordneten Kopfteil (24) aufweist, wobei der Kopfteil (24) mit einer dem Ventilsitz (20) zugewandten und mit der Formgebung des Ventilsitzes korrespondierenden Steuerfläche (25) versehen ist.

7. Espressokaffeemaschine (1) nach Anspruch 6, **dadurch gekennzeichnet, dass** sich der Ventilsitz (20) in Durchflussrichtung des Kaffeegetränks konisch verjüngt oder erweitert.

8. Espressokaffeemaschine (1) nach Anspruch 6 oder 7, **dadurch gekennzeichnet, dass** der Ventilkörper (21) einstückig ausgebildet ist und ein den Ventilsitz (20) bildender, aus einem elastischen Material gefertigter Einsatz (18) vorgesehen ist

9. Espressokaffeemaschine (1) nach einem der vorhergehenden Ansprüche, **dadurch gekennzeichnet, dass** in der federbelasteten Grundstellung der Ventileinrichtung (12) eine Öffnung (26) zwischen der Steuerfläche (25) des Ventilkörpers (21) und dem Ventilsitz (20) freibleibt.

10. Espressokaffeemaschine (1) nach einem der vorhergehenden Ansprüche, **dadurch gekennzeichnet, dass** der Ventilkörper (21) entgegen der Vorspannkraft der Feder (28) soweit verschiebbar ist, dass die Steuerfläche (25) des Kopfteils (24) den Ventilsitz (20) verschliesst.

11. Espressokaffeemaschine nach Anspruch 2, **dadurch gekennzeichnet, dass** die Vorspannkraft der Feder (30) manuell, elektromotorisch, elektromagnetisch, pneumatisch oder hydraulisch verstellbar ist.

12. Espressokaffeemaschine nach Anspruch 3, **dadurch gekennzeichnet, dass** die Mittel (37, 39) zum Verändern des relevanten Auslassquerschnitts der Ventilkammer (19) manuell, elektromotorisch, elektromagnetisch, pneumatisch oder hydraulisch betätigbar sind.

13. Espressokaffeemaschine nach Anspruch 3 oder 12, **dadurch gekennzeichnet, dass** der Ventilkammerauslass durch eine mit einem definierten Querschnitt versehene Bohrung (17) gebildet ist, und dass am auslasseitigen Ende dieser Bohrung (17) ein Nadelventil (37) angeordnet ist, mittels welchem der strömungstechnisch relevante Auslassquerschnitts der Ventilkammer (19) veränderbar ist.

14. Espressokaffeemaschine (1) nach Anspruch 2, **dadurch gekennzeichnet, dass** die Mittel zum Verändern der Vorspannkraft der Feder (29) bzw. zum Verändern des relevanten Auslassquerschnitts der Ventilkammer (19) eine Stellschraube (28, 39) oder einen Drehknopf (52) umfassen.

15. Espressokaffeemaschine nach Anspruch 14, **dadurch gekennzeichnet, dass** Rastelemente (50) zum Fixieren des Drehknopfs (52) in vorbestimmten Positionen vorgesehen sind.

16. Espressokaffeemaschine (1) nach Anspruch 4, **dadurch gekennzeichnet, dass** der Basisteil (23) des Ventilkörpers (21) auf der einem Rückraum (30) zugewandten Seite mit einer Ausnehmung zur Fixierung und zum Abstützen der Feder (29) vorgesehen ist.

17. Espressokaffeemaschine nach Anspruch 4 oder 16, **dadurch gekennzeichnet, dass** eine Membran (32) zum Abdichten der Ventilkammer (19) gegenüber dem Rückraum (30) vorgesehen ist.

18. Espressokaffeemaschine nach Anspruch 17, **dadurch gekennzeichnet, dass** die Membran (32) eine zentrale Öffnung aufweist, durch welche sich der Schaft (22) des Ventilkörpers (21) erstreckt.

19. Espressokaffeemaschine (1) nach Anspruch 17 oder 18, **dadurch gekennzeichnet, dass** ein mehrteiliges Ventilgehäuse (14) vorgesehen ist, wobei die Membran (32) zwischen zwei Gehäuseteilen (14b, 14c) fixiert ist.

20. Espressokaffeemaschine (1) nach Anspruch 2 oder 3, **dadurch gekennzeichnet**, die Kaffeemaschine Mittel zum automatischen Einstellen der Feder-Vorspannkraft bzw. des strömungstechnisch relevanten Auslassquerschnitts der Ventilkammer (19) in Abhängigkeit des aufzubereitenden Kaffeegetränketyps aufweist.

## Claims

1. Espresso coffee machine (1) having a brewing chamber (6) for receiving and for brewing coffee powder, and having a valve device (12) which is arranged between the brewing chamber (6) and a drink outlet (7) and has a valve body (21), which can be displaced relative to a valve seat (20) and is loaded by means of a spring (29), and is designed as a regulating valve device, in which the spring (29) endeavours to keep the valve body (21) in the open position and the valve body (21) can be displaced in the closing direction by the pressurized coffee drink counter to the prestressing force of the spring (29), **characterized in that** means (27, 28; 37, 39) which can be influenced by the user are provided for changing the quantity of coffee drink flowing through the valve device (12) per unit of time.

2. Espresso coffee machine (1) according to Claim 1, **characterized in that** means (27, 28) are provided for changing the prestressing force of the spring (29).

3. Espresso coffee machine (1) according to Claim 1 or 2, **characterized in that** the valve seat (20) is arranged at the inlet of a valve chamber (19) and means (37, 39) are provided for changing the flow-relevant outlet cross section of the valve chamber (19).

4. Espresso coffee machine (1) according to one of the preceding claims, **characterized in that** the valve seat (20) is arranged at the inlet of a valve chamber (19), the outlet of which is formed by a hole (17) provided with a defined cross section, a base part (23) of the valve body (21), which base part can be acted upon by the pressurized coffee drink, being arranged in the valve chamber (19).

5. Espresso coffee machine (1) according to one of the preceding claims, **characterized in that** the valve device (12) is designed as a mechanical regulating valve which changes the cross section, which is relevant for the coffee drink flowing through it, of an opening (26) on the valve seat (20) as a function of the flow resistance opposing the brewing water of the coffee powder to be brewed, in such a manner that a largely constant throughflow rate of the coffee drink through the coffee powder situated in the brewing chamber can be achieved.

6. Espresso coffee machine (1) according to one of the preceding claims, **characterized in that** the valve body (21) has a stem (22) with a head part (24) arranged on the end side thereof, the head part (24) being provided with a control surface (25) which faces the valve seat (20) and corresponds to the shaping of the valve seat.

7. Espresso coffee machine (1) according to Claim 6, **characterized in that** the valve seat (20) tapers conically or widens in the throughflow direction of the coffee drink.

8. Espresso coffee machine (1) according to Claim 6 or 7, **characterized in that** the valve body (21) is of integral design and an insert (18) which forms the valve seat (20) and is manufactured from an elastic material is provided.

9. Espresso coffee machine (1) according to one of the preceding claims, **characterized in that**, in the spring-loaded basic position of the valve device (12), an opening (26) remains free between the control surface (25) of the valve body (21) and the valve seat (20).

10. Espresso coffee machine (1) according to one of the preceding claims, **characterized in that** the valve body (21) can be displaced counter to the prestressing force of the spring (28) until the control surface (25) of the head part (24) closes the valve seat (20).

11. Espresso coffee machine according to Claim 2, **characterized in that** the prestressing force of the spring (30) can be adjusted manually, by electric motor, electromagnetically, pneumatically or hydraulically.

12. Espresso coffee machine according to Claim 3, **characterized in that** the means (37, 39) for changing the relevant outlet cross section of the valve chamber (19) can be actuated manually, by electric motor, electromagnetically, pneumatically or hydraulically.

13. Espresso coffee machine according to Claim 3 or 12, **characterized in that** the valve chamber outlet is formed by a hole (17) provided with a defined cross section, and **in that** a needle valve (37) is arranged at the outlet end of this hole (17) and can be used to change the flow-relevant outlet cross section of the valve chamber (19).

14. Espresso coffee machine (1) according to Claim 2, **characterized in that** the means for changing the prestressing force of the spring (29) or for changing the relevant outlet cross section of the valve chamber (19) comprise an adjusting screw (28, 39) or a rotary knob (52).

15. Espresso coffee machine according to Claim 14, **characterized in that** latching elements (50) are provided for fixing the rotary knob (52) in predetermined positions.

16. Espresso coffee machine (1) according to Claim 4, **characterized in that** the base part (23) of the valve body (21) is provided, on the side which faces a rear space (30), with a recess for fixing and for supporting the spring (29).

17. Espresso coffee machine according to Claim 4 or 16, **characterized in that** a diaphragm (32) is provided for sealing off the valve chamber (19) with respect to the rear space (30).

18. Espresso coffee machine according to Claim 17, **characterized in that** the diaphragm (32) has a central opening through which the stem (22) of the valve body (21) extends.

19. Espresso coffee machine (1) according to Claim 17 or 18, **characterized in that** a multi-part valve housing (14) is provided, the diaphragm (32) being fixed between two housing parts (14b, 14c).

20. Espresso coffee machine (1) according to Claim 2 or 3, **characterized in that** the coffee machine has means for automatically setting the spring prestressing force or the flow-relevant outlet cross section of the valve chamber (19) as a function of the type of coffee drink which is to be prepared.

## Revendications

1. Machine à café expresso (1) comprenant une chambre à bouillir (6) destinée à recevoir et à infuser du café en poudre ainsi qu'un dispositif formant soupape (12) disposé entre la chambre à bouillir (6) et une sortie pour la boisson (7), lequel dispositif comprend un corps de soupape (21) mobile par rapport à un siège de soupape (20), pouvant être sollicité au moyen d'un ressort (29) et conçu comme un dispositif formant soupape de réglage, dans lequel le ressort (29) s'efforce de maintenir le corps de soupape (21) dans la position ouverte et le corps de soupape (21) peut être déplacé dans la direction de fermeture par la boisson au café sous pression à l'encontre de la force de précontrainte du ressort (29), **caractérisée en ce que** des moyens (27, 28 ; 37, 39) pouvant être influencés par l'utilisateur sont prévus pour modifier la quantité de boisson au café s'écoulant par unité de temps à travers le dispositif formant soupape (12).

2. Machine à café expresso (1) selon la revendication 1, **caractérisée en ce que** des moyens (27, 28) destinés à modifier la force de précontrainte du ressort (29) sont prévus.

3. Machine à café expresso (1) selon la revendication 1 ou 2, **caractérisée en ce que** le siège de soupape (20) est disposé à l'entrée d'une chambre de soupape (19) et des moyens (37, 39) sont prévus pour modifier la section de sortie, essentielle en matière de technique d'écoulement, de la chambre de soupape (19).

4. Machine à café expresso (1) selon l'une quelconque des revendications précédentes, **caractérisée en ce que** le siège de soupape (20) est disposé à l'entrée d'une chambre de soupape (19), dont la sortie est formée par un alésage (17) pourvu d'une section définie, un élément de base (23) du corps de soupape (21), pouvant être sollicité par la boisson au café sous pression, étant disposé dans la chambre de soupape (19).

5. Machine à café expresso (1) selon l'une quelconque des revendications précédentes, **caractérisée en ce que** le dispositif formant soupape (12) est conçu comme une soupape de réglage mécanique, laquelle modifie la section, essentielle pour la boisson au café s'écoulant, d'une ouverture (26) sur le siège de soupape (20) en fonction de la résistance à l'écoulement opposée à l'eau bouillante du café en poudre infusant, de telle sorte qu'une vitesse d'écoulement largement constante de la boisson au café peut être obtenue par le café en poudre situé dans la chambre à bouillir.

6. Machine à café expresso (1) selon l'une quelconque des revendications précédentes, **caractérisée en ce que** le corps de soupape (21) comprend une tige (22) avec un élément de tête (24) disposé sur celle-ci côté extrémité, l'élément de tête (24) étant pourvu d'une surface de commande (25) associée au siège de soupape (20) et correspondant à la forme du siège de soupape.

7. Machine à café expresso (1) selon la revendication 6, **caractérisée en ce que** le siège de soupape (20) se rétrécit ou s'élargit de façon conique dans la direction d'écoulement de la boisson au café.

8. Machine à café expresso (1) selon la revendication 6 ou 7, **caractérisée en ce que** le corps de soupape (21) est conçu en une seule pièce et **en ce qu'**il est prévu une garniture de joint (18) fabriquée à partir d'un matériau élastique, formant le siège de soupape (20).

9. Machine à café expresso (1) selon l'une quelconque des revendications précédentes, **caractérisée en ce qu'**une ouverture (26) entre la surface de commande (25) du corps de soupape (21) et le siège de soupape (20) reste libre dans la position de base sollicitée par un ressort du dispositif de soupape (12).

10. Machine à café expresso (1) selon l'une quelconque des revendications précédentes, **caractérisée en ce que** le corps de soupape (21) peut être déplacé à l'encontre de la force de précontrainte du ressort (28) jusqu'à ce que la surface de commande (25) de l'élément de tête (24) ferme le siège de soupape (20).

11. Machine à café expresso selon la revendication 2, **caractérisée en ce que** la force de précontrainte du ressort (30) est réglable de façon manuelle, électromotrice, électromagnétique, pneumatique ou hydraulique.

12. Machine à café expresso selon la revendication 3, **caractérisée en ce que** les moyens (37, 39) destinés à modifier la section de sortie essentielle de la chambre de soupape (19) peuvent être actionnés de façon manuelle, électromotrice, électromagnétique, pneumatique ou hydraulique.

13. Machine à café expresso selon la revendication 3 ou 12, **caractérisée en ce que** la sortie de la chambre de soupape est formée par un alésage (17) pourvu d'une section définie, et **en ce qu'**à l'extrémité côté sortie de cet alésage (17) est disposée une soupape à pointeau (37), au moyen de laquelle la section de sortie, essentielle en matière de technique d'écoulement, de la chambre de soupape (19) peut être modifiée.

14. Machine à café expresso (1) selon la revendication 2, **caractérisée en ce que** les moyens destinés à modifier la force de précontrainte du ressort (29) et/ou à modifier la section de sortie essentielle de la chambre de soupape (19) comprennent une vis de réglage (28, 39) ou un bouton tournant (52).

15. Machine à café expresso selon la revendication 14, **caractérisée en ce que** des éléments d'enclenchement (50) destinés à fixer le bouton tournant (52) sont prévus dans les positions prédéfinies.

16. Machine à café expresso (1) selon la revendication 4, **caractérisée en ce que** l'élément de base (23) du corps de soupape (21) est prévu sur le côté tourné vers un espace de retour (30) comprenant un évidement destiné à fixer et à soutenir le ressort (29).

17. Machine à café expresso selon la revendication 4 ou 16, **caractérisée en ce qu'**une membrane (32) est prévue pour étanchéifier la chambre de soupape (19) par rapport à l'espace de retour (30).

18. Machine à café expresso selon la revendication 17, **caractérisée en ce que** la membrane (32) comprend une ouverture centrale, à travers laquelle s'étend la tige (22) du corps de soupape (21).

19. Machine à café expresso (1) selon la revendication 17 ou 18, **caractérisée en ce qu'**il est prévu un logement de soupape à plusieurs pièces (14), la membrane (32) étant fixée entre deux parties de logement (14b, 14c).

20. Machine à café expresso (1) selon la revendication 2 ou 3, **caractérisée en ce que** la machine à café comprend des moyens destins à régler automatiquement la force de précontrainte du ressort et/ou la section de sortie essentielle en matière de technique d'écoulement de la chambre de soupape (19) en fonction du type de boisson au café destinée à être préparée.
